# EUROPEAN PATENT SPECIFICATION

(11) **EP 0 694 419 B1**
(45) Date of publication and mention of the grant of the patent: **14.01.1998**
(21) Application number: 95303617.5
(22) Date of filing: 26.05.1995
(51) Int. Cl.: B43K 23/00, B60R 7/08

(54) **A pen holder**
Schreiberhalterung
Porte-stylo

(30) Priority: 23.07.1994 GB 9415276
(43) Date of publication of application: 31.01.1996
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50735 Köln (DE)
(72) Inventor: Jones, Clifford, Chelmsford, Essex CM3 5LX (GB); Tsang, Peter Ping Yau, North Shoebury, Essex SS3 8TW (GB)
(74) Representative: Messulam, Alec Moses

(56) References cited:
- WO-A-94/10883
- CH-A- 87 421
- FR-A- 2 700 142
- US-A- 2 006 843

## Description

This invention relates to a pen holder for holding a pen in a secure position.

It is often desirable to be able to provide a holder for a pen, into which the pen can be easily inserted and yet which holds the pen secure and ready for use. This requirement exists for example in motor vehicles, but also in other environments.

It is desirable that a pen holder should be easy to use, ie it should be easy to insert the pen into the holder and easy to remove the pen from the holder, and the holder should also be able to accommodate pens of varying sizes.

One type of pen holder adapted for use in a motor vehicle is disclosed in patent document US-A-2006843. This describes a pen or pencil clip formed from sheet metal that is cut and bent to form two clamping leaves connected at their base ends, and between which a pen or pencil may be inserted.

In this specification the term "pen" is used to refer to writing implements generally, and includes in particular pencils and other elongate writing implements.

According to the invention, there is provided a pen holder comprising a base plate with a first reaction member, the first reaction member having a first reaction surface facing towards and spaced from the base plate, characterised in that the base plate has a second reaction member having a second reaction surface spaced from and facing away from the base plate, the second reaction member being on the same side of the base plate as the first reaction member, wherein the spacings of the reaction surfaces from the base plate and the distance between the reaction surfaces in a direction generally parallel to the base plate are such that a pen can be wedged in a position where it is in contact with the base plate and both of the reaction surfaces, with the point of contact of the pen with the first reaction surface lying between the points of contact of the pen with the base plate and with the second reaction surface.

References in this specification to spatial orientation, eg 'above' or 'height' refer to the situation where the base plate is horizontal. The invention is not however limited to an arrangement where the base plate is horizontal, and terms in the specification should be construed accordingly.

The first reaction surface is preferably formed by the underside of a bridge upstanding from the base plate, and the second reaction surface is preferably formed by the top of a wall which lies above the base plate.

When a pen is held in the holder, the pen body is stressed slightly in bending, and limbs of the bridge which stand up from the base plate are stressed in tension. Although neither of these stresses is sufficient to noticeably distort either the pen or the bridge, the stresses are sufficient to ensure that friction produced between the pen and the various surfaces is sufficient to hold the pen firmly in place.

The base plate may be flat or, as is preferred, may be dished to guide the tip of the pen into the bridge. Where the base plate is dished, the wall upper surface may be formed by an edge of the dished region.

The pen holder may be moulded from plastics material, and can be formed on the surface of another component. For example, the pen holder may be formed on the inside of a glove compartment door in a motor vehicle, and the invention extends to a glove compartment door with a pen holder as set forth above associated with the door. Where the glove compartment door is made from an inner and an outer moulding, the two mouldings may each have features forming part of the pen holder.

A suitable plastics material is polypropylene.

The longitudinal distance between the bridge and the wall upper surface is preferably between 25 and 70 millimetres, most preferably between 30 and 55 millimetres.

The height of the bridge surface facing the base plate above the base plate is preferably 10 to 20 millimetres, most preferably 13 to 18 millimetres. The height of the wall upper surface above the base plate is preferably 5 to 10 millimetres, most preferably 7 to 9 millimetres.

The pen holder can be mounted in substantially any orientation. To insert the pen in the holder is a single operation requiring only that the pen be pushed in in one direction.

The invention will now be further described, by way of example, with reference to the accompanying drawings, in which:
Figure 1 is a cross-sectional view through a first embodiment of the invention;
Figure 2 is cross-sectional view through a second embodiment of the invention;
Figure 3 is a perspective view of the second embodiment of the invention;
Figure 4 shows the inside of a glove compartment door incorporating a pen holder in accordance with the invention;
Figure 5 is a section through the door of Figure 4 on the line V-V; and
Figure 6 is a section through the door of Figure 4 on the line VI-VI.

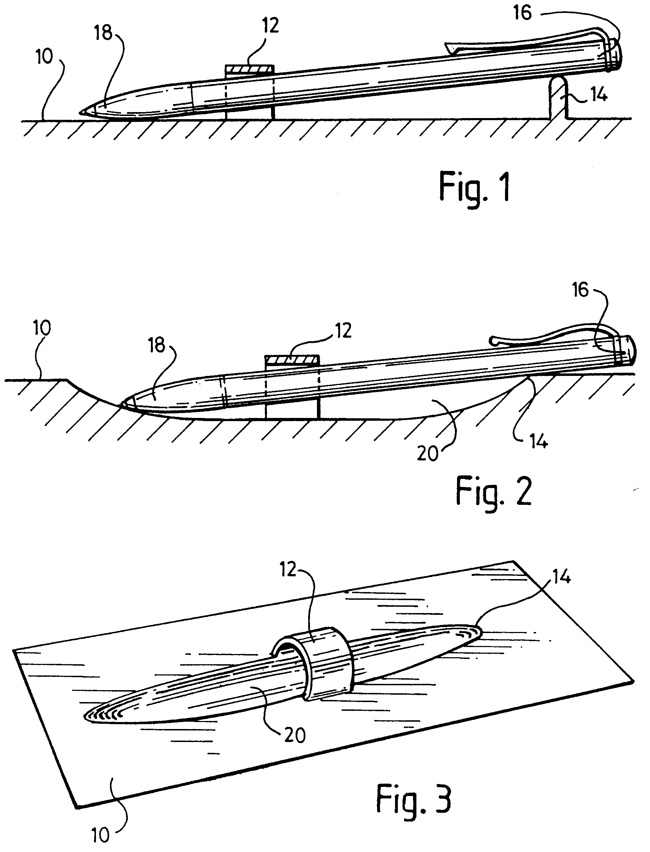

Figure 1 shows a pen holder on a flat base plate 10 with a bridge 12 upstanding from the baseplate, and a raised wall 14. A pen 16 is held in this pen holder by inserting the tip 18 of the pen under the bridge 12 until the pen becomes wedged with part of the pen near the tip 18 jammed against the base plate, with an intermediate part jammed under the bridge 12 and with a part nearer the top end of the pen jammed against the upper surface of the wall 14.

It has been found that with a relatively low insertion force, an effective holding of the pen is achieved which keeps the pen secure, prevents it rattling and yet allows easy withdrawal from the holder. In this respect it will be noted that the top end of the pen is held above the surface 12 where it is easy to grip it to withdraw the pen from the holder.

Figure 2 shows an alternative embodiment where the tip 18 of the pen is located in a recess 20 of the baseplate. By recessing that part of the baseplate where the pen is to lie, the tip of the pen is protected, the height of the bridge 12 is reduced and the wall upper surface 14 can be formed by an edge of the recess.

The pen holder described above differs from many existing pen holders in that the pen body is stressed when held in the holder, and it is this stress which ensures that sufficient friction exists between the three points where the pen makes contact with the holder, to hold the pen in place.

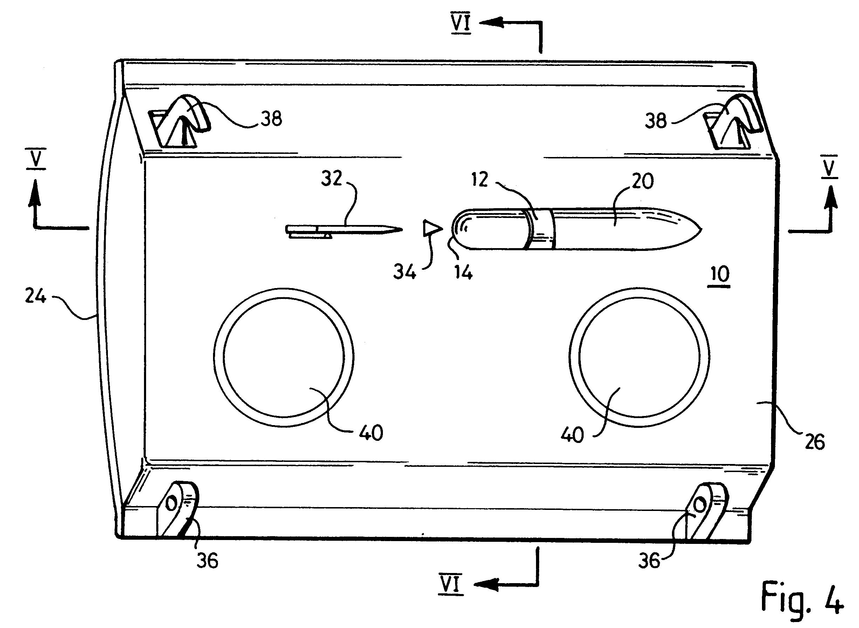

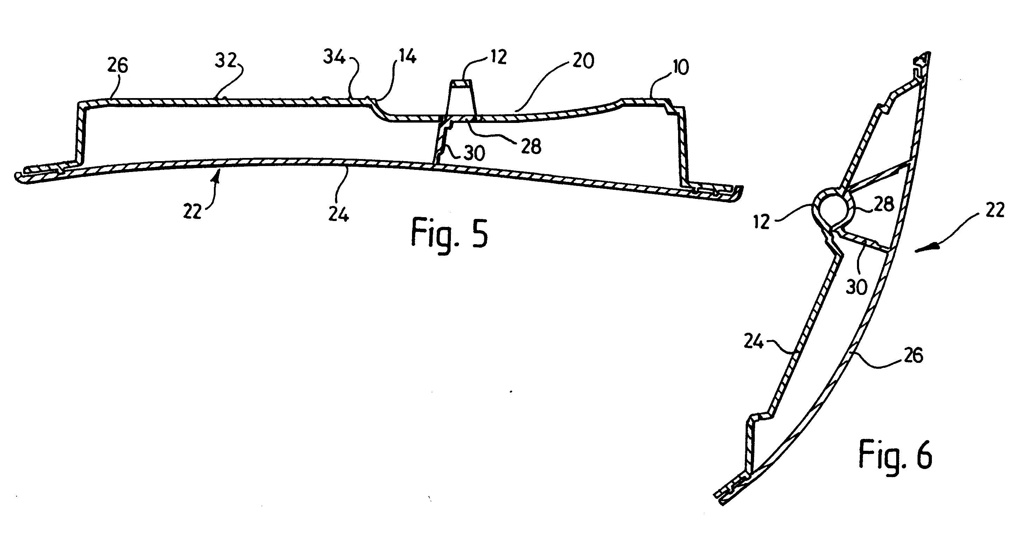

Figures 4, 5 and 6 show a pen holder in a specific application in a vehicle, ie on the back face, or the inside of a glove compartment door 22. The door is formed from an outer moulding 24 and an inner moulding 26 and has hinges at 36 and catches at 38. The manner in which these hinges and catches are arranged is not relevant to the present invention. As can be seen particularly in Figures 4 and 5, the bridge 12, the reaction surface 14 and most of the recess 20 are formed as part of the inner moulding. However beneath the bridge 12, the surface of the recess is completed by an insert 28 moulded as part of the outer moulding 24 and connected to the outer moulding by a web 30.

The surface of the inner moulding 26 can be formed with a moulded-in pen symbol 32 and a moulded-in 'direction of insertion' arrow 34 to simplify usage of the holder.

## Claims

1. A pen holder comprising a base plate (10) with a first reaction member (12), the first reaction member (12) having a first reaction surface facing towards and spaced from the base plate (10), characterised in that the base plate (10) has a second reaction member (14) having a second reaction surface spaced from and facing away from the base plate (10), the second reaction member (14) being on the same side of the base plate (10) as the first reaction member (12), wherein the spacings of the reaction surfaces from the base plate (10) and the distance between the reaction surfaces in a direction generally parallel to the base plate (10) are such that a pen (16) can be wedged in a position where it is in contact with the base plate (10) and both of the reaction surfaces, with the point of contact of the pen (16) with the first reaction surface lying between the points of contact of the pen (16) with the base plate (10) and with the second reaction surface.

2. A pen holder as claimed in Claim 1, wherein the first reaction surface is formed by the underside of a bridge (12) upstanding from the base plate (10).

3. A pen holder as claimed in Claim 1 or Claim 2, wherein the second reaction surface is formed by the top of a wall (14) which lies above the base plate (10).

4. A pen holder as claimed in any preceding claim, wherein the base plate (10) is flat.

5. A pen holder as claimed in any one of Claims 1 to 3, wherein the base plate (10) is dished (20) to guide the tip of the pen (16) into the bridge (12).

6. A pen holder as claimed in Claim 5, wherein the second reaction surface is formed by an edge (14) of the dished region (20).

7. A pen holder as claimed in any preceding claim, wherein the base plate (10) and the two reaction surfaces are moulded in one piece from plastics material.

8. A pen holder as claimed in any preceding claim, wherein the longitudinal distance between the first reaction surface and the second reaction surface is between 25 and 70 millimetres.

9. A pen holder as claimed in any preceding claim, wherein the longitudinal distance between the first reaction surface and the second reaction surface is between 30 and 55 millimetres.

10. A pen holder as claimed in any preceding claim, wherein the spacing between the base plate (10) and the first reaction surface is in the range 10 to 20 millimetres.

11. A pen holder as claimed in any preceding claim, wherein the spacing between the base plate (10) and the first reaction surface is in the range 13 to 18 millimetres.

12. A pen holder as claimed in any preceding claim, wherein the height of the second reaction surface above the base plate (10) is 5 to 10 millimetres.

13. A pen holder as claimed in any preceding claim, wherein the height of the second reaction surface above the base plate (10) is 7 to 9 millimetres.

14. A glove compartment door (22) having a pen holder as claimed in any preceding claim associated with the inside face (26) thereof (22).

15. A glove compartment door as claimed in Claim 14, wherein the door (22) is formed of moulded plastics material, and the pen holder is moulded integrally with the door (22).

16. A glove compartment door as claimed in Claim 15, wherein the plastics material is polypropylene.

## Patentansprüche

1. Ein Halter für eine Schreibfeder bestehend aus einer Sockelplatte (10) mit einem ersten Reaktionsglied (12), wobei das erste Reaktionsglied (12) eine erste Reaktionsfläche hat, die zur Sockelplatte (10) hin gewendet ist und sich in einem Abstand zu ihr befindet, dadurch gekennzeichnet dass die Sockelplatte (10) ein zweites Reaktionsglied (14) mit einer zweiten Reaktionsfläche hat, die sich in einem Abstand von der Sockelplatte (10) befindet und von ihr weg gerichtet ist, wobei das zweite Reaktionsglied (14) auf der gleichen Seite der Sockelplatte (10) wie das erste Reaktionsglied (12) liegt, in dem die Abstände der Reaktionsflächen von der Sockelplatte (10) und die Entfernung zwischen den Reaktionsflächen in einer im allgemeinen parallelen Richtung zur Sockelplatte (10) derartig ausgelegt sind, dass eine Schreibfeder (16) in eine Stellung geklemmt werden kann, in der sie in Kontakt mit der Sockelplatte (10) und den beiden Reaktionsflächen ist, wobei der Kontaktpunkt der Schreibfeder (16) mit der ersten Reaktionsfläche zwischen den Kontaktpunkten der Schreibfeder (16), mit der Sockelplatte (10) und mit der zweiten Reaktionsfläche liegt.

2. Ein Halter für eine Schreibfeder nach Anspruch 1, in dem die erste Reaktionsfläche durch die Unterseite einer Brücke (12) gebildet wird, die aus der Sockelplatte (10) herausragt.

3. Ein Halter für eine Schreibfeder nach Anspruch 1 oder 2, in dem die zweite Reaktionsfläche durch das obere Ende einer Wand (14) gebildet wird, die über der Sockelplatte (10) liegt.

4. Ein Halter für eine Schreibfeder nach irgendeinem der vorausgegangenen Ansprüche, in dem die Sockelplatte (10) flach ist.

5. Ein Halter für eine Schreibfeder nach irgendeinem der Ansprüche 1 bis 3, in dem die Sockelplatte (10) vertieft (20) ist, um die Spitze der Schreibfeder (16) in die Brücke (12) zu führen.

6. Ein Halter für eine Schreibfeder nach Anspruch 5, in dem die zweite Reaktionsfläche durch eine Kante (14) des vertieften Abschnitts (20) gebildet wird.

7. Ein Halter für eine Schreibfeder nach irgendeinem der vorausgegangenen Ansprüche, in dem die Sockelplatte (10) und die beiden Reaktionsflächen als ein Stück aus Kunststoff gegossen sind.

8. Ein Halter für eine Schreibfeder nach irgendeinem der vorausgegangenen Ansprüche, in dem die Longitudinalentfernung zwischen der ersten Reaktionsfläche und der zweiten Reaktionsfläche zwischen 25 und 70 Millimetern liegt.

9. Ein Halter für eine Schreibfeder nach irgendeinem der vorausgegangenen Ansprüche, in dem die Longitudinalentfernung zwischen der ersten Reaktionsfläche und der zweiten Reaktionsfläche zwischen 30 und 55 Millimetern liegt.

10. Ein Halter für eine Schreibfeder nach irgendeinem der vorausgegangenen Ansprüche, in dem der Abstand zwischen der Sockelplatte (10) und der ersten Reaktionsfläche in der Grössenordnung von 10 bis 20 Millimetern liegt.

11. Ein Halter für eine Schreibfeder nach irgendeinem der vorausgegangenen Ansprüche, in dem der Abstand zwischen der Sockelplatte (10) und der ersten Reaktionsfläche in der Grössenordnung von 13 bis 18 Millimetern liegt.

12. Ein Halter für eine Schreibfeder nach irgendeinem der vorausgegangenen Ansprüche, in dem die Höhe der ersten Reaktionsfläche über der Sockelplatte (10) bei 5 bis 10 Millimetern liegt.

13. Ein Halter für eine Schreibfeder nach irgendeinem der vorausgegangenen Ansprüche, in dem die Höhe der zweiten Reaktionsfläche über der Sockelplatte (10) bei 7 bis 9 Millimetern liegt.

14. Eine Tür (22) eines Handschuhfachs mit einem Halter für eine Schreibfeder nach irgendeinem der vorausgegangenen Ansprüche, der mit der Innenseite (26) der Tür (22) verbunden ist.

15. Eine Tür eines Handschuhfachs nach Anspruch 14, in der die Tür (22) aus gegossenem Kunststoff hergestellt ist und der Halter für die Schreibfeder in der Tür (22) integriert ist.

16. Eine Tür eines Handschuhfachs nach Anspruch 15, in der Polypropylen der Kunststoff ist.

## Revendications

1. Support pour stylo comprenant une plaque de base (10) avec un premier élément de réaction (12), le premier élément de réaction (12) présentant une première surface de réaction faisant face à la plaque de base (10) et espacée de celle-ci, caractérisé en ce que la plaque de base (10) présente un second élément de réaction (14) présentant une seconde surface de réaction espacée de la plaque de base (10) et opposée par rapport à celle-ci, le second élément de réaction (14) étant sur le même côté de la plaque de base (10) que le premier élément de réaction (12), dans lequel les écartements des surfaces de réaction depuis la plaque de base (10) et la distance entre les surfaces de réaction dans une direction généralement parallèle la plaque de base (10) sont tels qu'un stylo (16) peut être assujetti dans une position où il est en contact avec la plaque de base (10) et avec les deux surfaces de réaction, le point de contact du stylo (16) avec la première surface de réaction se trouvant entre les points de contact du stylo (16) avec la plaque de base (10) et la seconde surface de réaction.

2. Support pour stylo selon la revendication 1, dans lequel la première surface de réaction est formée par la partie inférieure d'un pont (12) s'élevant depuis la plaque de base (10).

3. Support pour stylo selon la revendication 1 ou 2, dans lequel la seconde surface de réaction est formée par la partie supérieure d'une paroi(14) qui se trouve au dessus de la plaque de base (10).

4. Support pour stylo selon l'une des revendications précédentes, dans lequel la plaque de base (10) est plate.

5. Support pour stylo selon l'une des revendications 1 à 3, dans lequel la plaque de base (10) est incurvée (20) pour guider la pointe du stylo (16) dans le pont (12).

6. Support pour stylo selon la revendication 5, dans lequel la seconde surface de réaction est formée par une arête (14) de la zone incurvée (20).

7. Support pour stylo selon l'une des revendications précédentes, dans lequel la plaque de base (10) et les deux surfaces de réaction sont moulées en une pièce à partir de matière plastique.

8. Support pour stylo selon l'une des revendications précédentes, dans lequel la distance longitudinale entre la première surface de réaction et la seconde surface de réaction est comprise entre 25 et 70 millimètres.

9. Support pour stylo selon l'une des revendications précédentes, dans lequel la distance longitudinale entre la première surface de réaction et la seconde surface de réaction est comprise entre 30 et 55 millimètres.

10. Support pour stylo selon l'une des revendications précédentes, dans lequel l'écartement entre la plaque de base (10) et la première surface de réaction est compris entre 10 et 20 millimètres.

11. Support pour stylo selon l'une des revendications précédentes, dans lequel l'écartement entre la plaque de base (10) et la première surface de réaction est compris entre 13 et 18 millimètres.

12. Support pour stylo selon l'une des revendications précédentes, dans lequel la hauteur de la seconde surface de réaction au dessus de la plaque de base (10) est comprise entre 5 et 10 millimètres.

13. Support pour stylo selon l'une des revendications précédentes, dans lequel la hauteur de la seconde surface de réaction au dessus de la plaque de base (10) est comprise entre 7 et 9 millimètres.

14. Porte (22) de boîte à gants présentant un support pour stylo selon l'une des revendications précédentes associé à la face intérieure (26) de celle-ci (22).

15. Porte de boîte à gants selon la revendication 14 dans laquelle la porte (22) est formée dans une matière plastique moulée et le support pour stylo est formé intégralement avec la porte (22).

16. Porte de boîte à gants selon la revendication 15, dans laquelle la matière plastique est du polypropylène.
